# EUROPEAN PATENT APPLICATION

(11) **EP 2 981 133 A1**
(43) Date of publication of application: **03.02.2016**
(21) Application number: 14776284.3
(22) Date of filing: 27.03.2014
(51) Int. Cl.: H04W 36/12, H04W 36/02, H04W 36/18

(54) **PDN GATEWAY DEVICE AND MOBILE COMMUNICATION METHOD**

(30) Priority: 29.03.2013 JP 2013074001
(71) Applicant: NTT DOCOMO, INC., Chiyoda-ku Tokyo 100-6150 (JP)
(72) Inventor: MIAO, Zhen, Tokyo 100-6150 (JP); TANAKA, Itsuma, Tokyo 100-6150 (JP); SUZUKI, Keisuke, Tokyo 100-6150 (JP)
(74) Representative: Hoffmann Eitle
(86) International application number: PCT/JP2014/058860
(87) International publication number: WO 2014/157518

(57) **Abstract**

When a handover of a UE (20) occurs, a P-GW (60) sets a downlink data forwarding path that passes via a Target S-GW and a Target eNB, and when the serving gateway device switches from a Source S-GW to a Target S-GW that manages a Target eNB because of a transition of the UE (20), the P-GW (60) transmits an end marker, which indicates end of forwarding of the downlink data via a Source eNB, to the Source S-GW in accordance with the setting of the downlink data forwarding path.

## Description

### TECHNICAL FIELD

The present invention relates to a PDN gateway device and a mobile communication method capable of forwarding downlink data addressed to a mobile station toward a source serving gateway device or a target serving gateway device.

### BACKGROUND ART

Conventionally, in the technical standard for the radio access network (E-UTRAN) defined in the 3rd Generation Partnership Project (3GPP), when a transition such as a handover where a mobile station (UE) switches connection destination radio base stations (eNB) occurs, a transmission method has been defined whereby an end marker is transmitted from a serving gateway device to a source radio base station that was the transition source (for example, see Non-Patent Document 1).

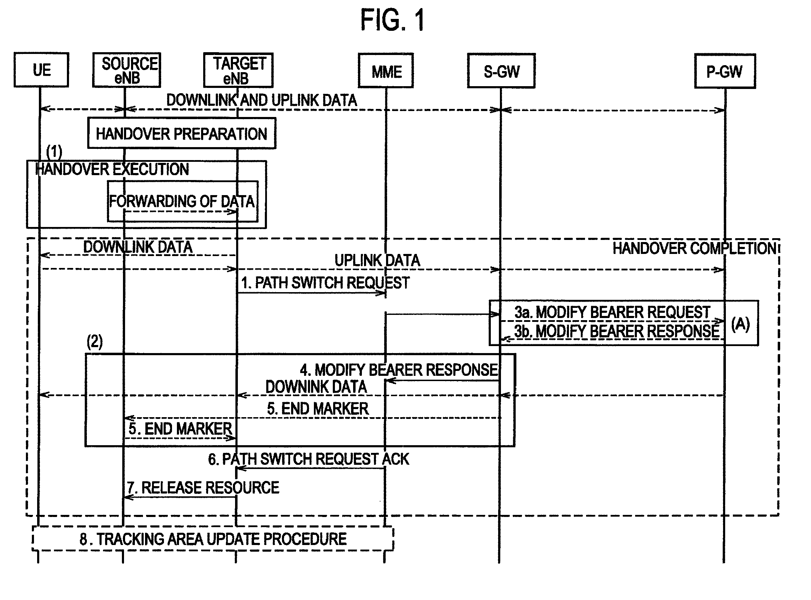

FIG. 1 illustrates a handover procedure of a mobile station in the conventional radio access network. Specifically, FIG. 1 shows the handover procedure that is defined in Section 5.5.1.1.2 (X2-based handover without Serving GW relocation) of 3GPP TS23.401.

As shown in FIG. 1, when the handover of the UE starts, a Source eNB (source radio base station) forwards downlink data that was addressed to the UE toward a Target eNB (target radio base station) as a handover destination (Forwarding of data) ((1) in FIG. 1). The downlink data is received from a network, specifically, a P-GW (PDN gateway device).

When a downlink forwarding path is established between an S-GW (serving gateway device) and the Target eNB, the downlink data (Fresh Data) addressed to the UE reaches the Target eNB ((2) in FIG. 1) . Specifically, after switching the connection destination of the downlink data forwarding path from the Source eNB to the target eNB, the S-GW transmits an end marker to the Source eNB. The Source eNB that received the end marker forwards the end marker toward the Target eNB.

To ensure an order (ordering) of the downlink data to be transmitted to the UE, the Target eNB temporarily buffers the downlink data (Fresh Data) received from the S-GW, and after receiving the end marker from the Source eNB, that is, after confirming that no more downlink data (Forwarding Data) will be forwarded from the Source eNB, forwards the downlink data (Fresh Data) toward the UE.

### PRIOR ART DOCUMENT

### NON-PATENT DOCUMENT

Non-Patent Document 1: 3GPP 23.401 V9.13.0 Section 4.4.3.2 Serving GW, 3rd Generation Partnership Project; Technical Specification Group Services and System Aspects; General Packet Radio Service (GPRS) enhancements for Evolved Universal Terrestrial Radio Access Network (E-UTRAN) access (Release 9), 3GPP, June 2012.

### SUMMARY OF THE INVENTION

However, the conventional handover procedure used in the handover of a mobile station in a radio access network has the following problems. Specifically, because each radio base station is managed by a specific S-GW, there can occur a situation (S-GW Relocation) where the S-GW that manages the Source eNB and the S-GW that manages the Target eNB are different.

When this happens, the S-GW (source serving gateway device) that manages the Source eNB cannot recognize the downlink data forwarding path set to the Target eNB. Accordingly, the S-GW that manages the Source eNB cannot determine the timing of transmitting an end marker, and therefore, cannot transmit the end marker. Therefore, when such a handover where the S-GWs that manage the radio base station are different occurs, the order of the downlink data cannot be guaranteed in the Target eNB.

As a solution to this problem, one approach could be to prepare a timer in the Target eNB, and the downlink data (Fresh Data) that was received from the S-GW after a preset timing has reached could be forwarded toward the mobile station (UE). However, if a short timing is set in the timer, the possibility that the downlink data (Forwarding Data) is forwarded from the Source eNB after start of the forwarding of the downlink data (Fresh Data) toward the UE increases. In this case also, it is difficult to guarantee the order of the downlink data. Consequently, data retransmission in the upper layer increases, resulting in a reduction in the throughput of the downlink data.

On the other hand, if a long timing is set in the timer, the possibility that a waiting time from the completion of forwarding of the downlink data (Forwarding Data) from the Source eNB toward the UE to the start of forwarding of the downlink data (Fresh Data) increases, resulting in a reduction in the throughput of the downlink data.

The present invention has been made in view of the above circumstances. It is one object of the present invention to present a PDN gateway device and a mobile communication method that can guarantee the order of the downlink data while avoiding a reduction in the throughput of the downlink data, even in situations where a serving gateway device that manages a transition source radio base station of a mobile station and a serving gateway device that manages a transition destination radio base station of the mobile station are different.

According to one aspect of the present invention, a PDN gateway device capable of forwarding downlink data addressed to a mobile station toward any one of a source serving gateway device and a target serving gateway device includes a path setting unit that sets, when a transition of the mobile station occurs from a source radio base station to a target radio base station, a downlink data forwarding path, which passes via the target serving gateway device and the target radio base station, to the target serving gateway device; and an end-marker transmitting unit that, when switching of a serving gateway device occurs from the source serving gateway device that manages the source radio base station to the target serving gateway device that manages the target radio base station because of the transition, transmits an end marker, which indicates end of forwarding of the downlink data via the source radio base station, to the source serving gateway device in accordance with the setting of the downlink data forwarding path set by the path setting unit.

According to another aspect of the present invention, a PDN gateway device capable of forwarding downlink data addressed to a mobile station toward any one of a source serving gateway device and a target serving gateway device includes a path setting unit that sets, when a transition of the mobile station occurs from a source radio base station to a target radio base station, a downlink data forwarding path, which passes via the target serving gateway device and the target radio base station, to the target serving gateway device; and a transmission instructing unit that, when switching of a serving gateway device occurs from the source serving gateway device that manages the source radio base station to the target serving gateway device that manages the target radio base station, because of the transition, transmits an end marker transmission instruction instructing transmission of an end marker, which indicates end of forwarding of the downlink data via the source radio base station, to the source serving gateway device in accordance with the setting of the downlink data forwarding path set by the path setting unit.

According to still another aspect of the present invention, a mobile communication method for forwarding downlink data addressed to a mobile station toward any one of a source serving gateway device and a target serving gateway device includes setting, when a transition of the mobile station occurs from a source radio base station to a target radio base station, a downlink data forwarding path, which passes via the target serving gateway device and the target radio base station, between the target serving gateway device and a PDN gateway device; the PDN gateway device transmitting, when switching of a serving gateway device occurs from the source serving gateway device that manages the source radio base station to the target serving gateway device that manages the target radio base station because of the transition, an end marker, which indicates end of forwarding of the downlink data via the source radio base station, to the source serving gateway device in accordance with the setting of the downlink data forwarding path; and the source serving gateway device transmitting the end marker received from the PDN gateway device to the source radio base station.

According to still another aspect of the present invention, a mobile communication method capable of forwarding downlink data addressed to any one of a mobile station toward a source serving gateway device and a target serving gateway device includes setting, when a transition of the mobile station occurs from a source radio base station to a target radio base station, a downlink data forwarding path, which passes via the target serving gateway device and the target radio base station, between the target serving gateway device and a PDN gateway device; the PDN gateway device transmitting, when switching of a serving gateway device occurs from the source serving gateway device that manages the source radio base station to the target serving gateway device that manages the target radio base station because of the transition, an end marker transmission instruction instructing transmission of an end marker, which indicates end of forwarding of the downlink data via the source radio base station, to the source serving gateway device in accordance with the setting of the downlink data forwarding path; and the source serving gateway device forwarding an end marker to the source radio base station in accordance with the end marker transmission instruction received from the PDN gateway device.

### BRIEF DESCRIPTION OF DRAWINGS

[FIG. 1] FIG. 1 is a diagram illustrating a handover procedure of a mobile station according to an embodiment of the present invention implemented in a conventional radio access network.
[FIG. 2] FIG. 2 is a diagram that illustrates an overall schematic configuration of a mobile communication system 10 according to an embodiment of the present invention.
[FIG. 3] FIG. 3 is a functional block diagram of a P-GW 60 according to a first embodiment of the present invention.
[FIG. 4] FIG. 4 is a functional block diagram of an S-GW 50 according to the first embodiment of the present invention.
[FIG. 5] FIG. 5 is a diagram showing a handover procedure of a UE 20 according to Operation Example 1 of the first embodiment of the present invention.
[FIG. 6] FIG. 6 is a conceptual diagram illustrating a forwarding path of downlink data and an end marker when the handover procedure in Operation Example 1 according to the first embodiment of the present invention is performed.
[FIG. 7] FIG. 7 is a diagram showing a handover procedure of the UE 20 according to Operation Example 2 of the first embodiment of the present invention.
[FIG. 8] FIG. 8 is a functional block diagram of a P-GW 60 according to a second embodiment of the present invention.
[FIG. 9] FIG. 9 is a functional block diagram of an S-GW 50 according to the second embodiment of the present invention.
[FIG. 10] FIG. 10 is a diagram showing a handover procedure of a UE 20 according to Operation Example 1 of the second embodiment of the present invention.
[FIG. 11] FIG. 11 is a diagram showing a handover procedure of the UE 20 according to Operation Example 2 of the second embodiment of the present invention.

### MODES FOR CARRYING OUT THE INVENTION

Exemplary embodiments of the present invention will be explained below. With regard to the representation in the drawings, the same or similar components have been denoted by the same or similar reference numerals. The drawings are only schematic and the ratios of dimensions and the like shown in the drawings may differ from the actual ratios.

Therefore, specific dimensions and the like shall be determined after taking the following explanation into account. Moreover, it is a matter of course that the relations or ratios of mutual dimensions may differ among the drawings.

### [First Embodiment]

### (1) Overall Schematic Configuration of Mobile Communication System

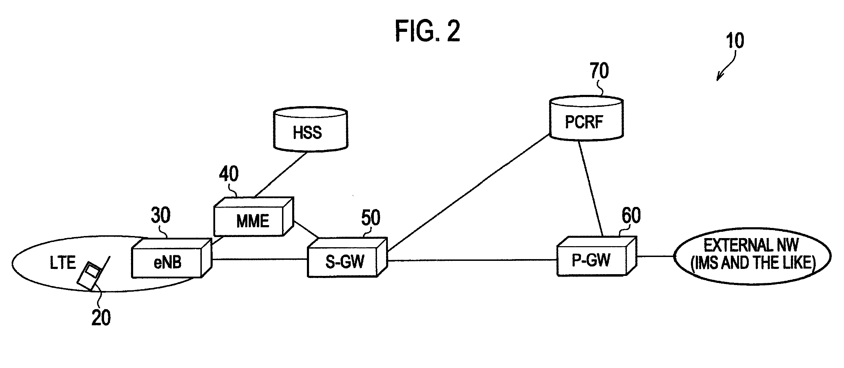

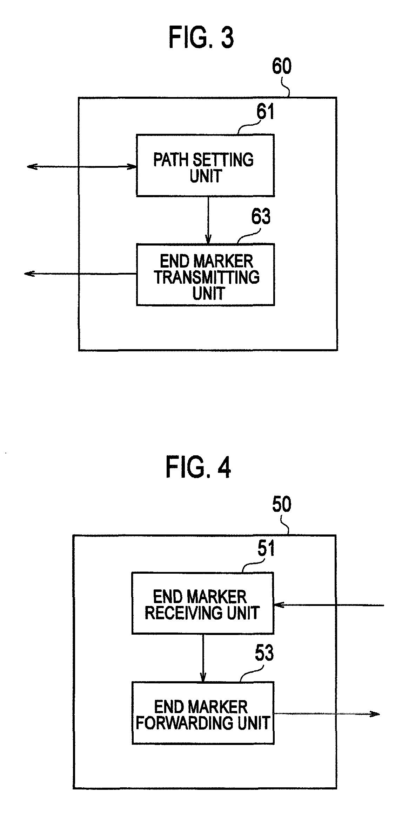

FIG. 2 is a diagram that illustrates an overall schematic configuration of a mobile communication system 10 according to the first embodiment of the present invention. As shown in FIG. 3, the mobile communication system 10 includes a mobile station 20 (hereinafter, UE 20), a radio base station 30 (hereinafter, eNB 30), a mobility management device (hereinafter, MME 40), a serving gateway device 50 (hereinafter, S-GW 50), a PDN gateway device 60 (hereinafter, P-GW 60), and a policy and charging rule function (hereinafter, PCRF 70). The mobile communication system 10 can include a home subscriber server (HSS). An IP-based external network (packet data network), such as an IP Multimedia core network Subsystem (IMS), is connected to the P-GW 60.

The MME 40 houses the eNB 30. The MME 40 is an exchange that provides controls such as mobility control and bearer control function. The S-GW 50 houses the access system of the 3GPP (LTE). Specifically, the S-GW 50 manages the eNB 30 that matches with certain conditions such as the installation area (for example, Northern Japan or Eastern Japan). That is, the S-GW 50 can manage multiple eNBs 30, and each of the eNBs 30 is associated with a particular one of the S-GW 50. In the present embodiment, when the UE 20 performs the handover, the S-GW 50 that manages a handover source radio base station (source radio base station) is called a Source S-GW (source serving gateway device), and the S-GW 50 that manages a handover destination radio base station (target radio base station) is called a Target S-GW (target serving gateway device).

The P-GW 60 is a node between a packet data network (PDN). The P-GW 60 performs processes such as IP address assignment and packet forwarding to the S-GW 50. Particularly, in the present embodiment, the P-GW 60 forwards the downlink data that is addressed to the UE 20 toward the S-GW 50. Specifically, the P-GW 60 forwards the downlink data that is addressed to the UE 20 toward the Source S-GW or the Target S-GW.

Moreover, the P-GW 60 operates in cooperation with the PCRF 70 to perform processes such as QoS control and bearer setting control. The PCRF 70 performs control for QoS and charging of the user data forwarding.

For the interface between the S-GW 50 and the P-GW 60, specifically, for the S5 interface or the S8 interface defined in the 3GPP, two types of protocols can be used. Specifically, the GPRS Tunneling Protocol (GTP) and the Proxy Mobile IPv6 (PMIPv6) can be used for this interface. More specifically, for the GTP, the GTPv1 that operates on a user plane (U-Plane) and the GTPv2 that operates on a control plane (C-Plane) are used. For the PMIPv6, the Generic Routing Encapsulation protocol that operates on the user plane (U-Plane) and the PMIP that operates on the control plane (C-Plane) are used.

### (2) Functional Block Configuration of Mobile Communication System

The functional block configuration of the mobile communication system 10 will be explained below. Specifically, the functional block configurations of the S-GW 50 and the P-GW 60 will be explained. FIG. 3 is a functional block diagram of the P-GW 60 and FIG. 4 is a functional block diagram of the S-GW 50. It shall be appreciated that only those functional blocks that are relevant to the present invention have been shown in FIG. 3 and FIG. 4 and other functional blocks have been omitted.

### (2.1) P-GW 60

As shown in FIG. 3, the P-GW 60 includes a path setting unit 61 and an end-marker transmitting unit 63.

The path setting unit 61 sets a path for data forwarding between the UE 20 and the P-GW 60 that passes via the eNB 30 and the S-GW 50. Specifically, the path setting unit 61 sets a path between the UE 20 and the P-GW 60 that allows uplink and downlink data forwarding.

Particularly, in the present embodiment, when a transition of the UE 20 takes place from the Source eNB to the Target eNB, the path setting unit 61 sets a downlink data forwarding path, which passes via the Target S-GW and the Target eNB, to the Target S-GW.

When the UE 20 performs handover to another radio base station, the end-marker transmitting unit 63 transmits an end marker to the Source eNB. When the end marker is received, in the handover by the UE 20, it means the completion of forwarding of the downlink data via the Source eNB.

Particularly, in the present embodiment, when the S-GW 50 switches from the Source S-GW that manages the Source eNB to the Target S-GW that manages the Target eNB because of a transition such as the handover of the UE 20, the end-marker transmitting unit 63 transmits the end marker to the Source eNB. Specifically, the end-marker transmitting unit 63 transmits the end marker to the Source S-GW in accordance with the downlink data forwarding path set by the path setting unit 61.

As will be explained later, the end-marker transmitting unit 63 transmits the end marker to the Source S-GW without delay when the path setting unit 61 sets the downlink data forwarding path to the Target S-GW. The switching of the S-GW 50 from the Source S-GW that manages the Source eNB to the Target S-GW that manages the Target eNB because of a transition such as the handover of the UE 20 typically includes, for example, a case where the UE 20 performs a handover from the currently connected eNB 30 (Source eNB) located near the boundary of the area (for example, Eastern Japan) that is managed by the Source S-GW to an eNB 30 (Target eNB) located near the boundary of an area (for example, Northern Japan) that is managed by another S-GW 50.

The end-marker transmitting unit 63 can transmit the end marker to the Source S-GW via a user plane set in accordance with the GPRS tunneling protocol (GTP) between the Source S-GW and the P-GW 60. Alternatively, the end-marker transmitting unit 63 can transmit the end marker to the Source S-GW via a user plane set in accordance with the Generic Routing Encapsulation (GRE) protocol between the Source S-GW and the P-GW 60. In other words, the end-marker transmitting unit 63 can transmit the end marker to the Source S-GW in a configuration where any one of the two types of protocols (GTP and PMIP) that can be used for the S5 interface or the S8 interface defined in the 3GPP.

### (2.2) S-GW 50

As shown in FIG. 4, the S-GW 50 includes an end marker receiving unit 51 and an end-marker forwarding unit 53.

When the S-GW 50 is operating as the Source S-GW, the end marker receiving unit 51 receives the end marker from the P-GW 60. The end marker receiving unit 51, after confirming that the received end marker is addressed to itself (Source S-GW), outputs the end marker to the end-marker forwarding unit 53.

The end-marker forwarding unit 53 forwards the end marker received from the P-GW 60 toward the Target eNB. Specifically, the end-marker forwarding unit 53 forwards the end marker that was output from the end marker receiving unit 51 toward the Target eNB.

### (3) Operation of Mobile Communication System

The operation of the mobile communication system 10 will be explained now. Specifically, a handover procedure of the UE 20 when the S-GW 50 switches from the Source S-GW to the Target S-GW will be explained. As explained above, as an example of the switching of the S-GW 50 from the Source S-GW to the Target S-GW, a case where the UE 20 performs handover from the currently connected eNB 30 (Source eNB) located near the boundary of the area (for example, Eastern Japan) that is managed by the Source S-GW to an eNB 30 (Target eNB) located near the boundary of an area (for example, Northern Japan) that is managed by another S-GW 50 can be mentioned.

### (3.1) Operation Example 1

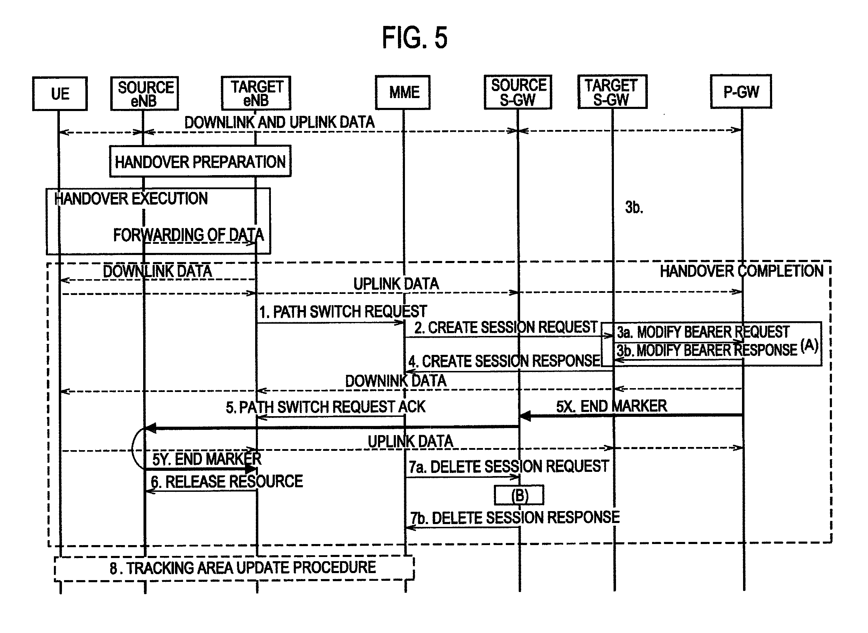

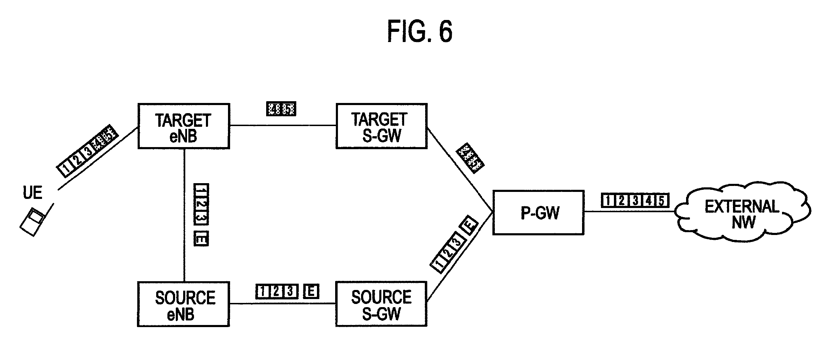

FIG. 5 shows the handover procedure of the UE 20 according to Operation Example 1. Specifically, FIG. 5 is obtained by making changes in the handover procedure shown in Figure 5.5.1.1.3-1 (X2-based handover with Serving GW relocation) of the 3GPP TS23.401. In Operation Example 1, GTP is used as the S5/S8 interface. FIG. 6 is a conceptual diagram illustrating a forwarding path of downlink data and an end marker when the handover procedure in Operation Example 1 is performed.

As shown in FIG. 5 and FIG. 6, in Operation Example 1, the P-GW 60 that can recognize the switching of the downlink data forwarding path transmits the end marker. Specifically, upon receiving a Modify Bearer Request from the Target S-GW (Step 3a), the P-GW 60 transmits a Modify Bearer Response to the Target S-GW in response to the received Modify Bearer Request (Step 3b). With this process, a downlink data forwarding path that passes via the P-GW 60, the Target S-GW, and the Target eNB is set, and the P-GW 60 starts forwarding of the downlink data to the Target S-GW (data #4 and #5 in FIG. 6).

Moreover, the P-GW 60 transmits the end marker to the Source S-GW. Specifically, the P-GW 60 transmits the end marker ("E" in FIG. 6) to the Source S-GW after forwarding of the downlink data via the Source eNB (data #1, #2, and #3 in FIG. 6) has been completed (Step 5X).

The source S-GW that received the end marker forwards the downlink data (data #1, #2, #3) and the end marker, which were forwarded from the P-GW 60, toward the Source eNB. Moreover, the Source eNB that received the downlink data (data #1, #2, #3) and the end marker forwards the downlink data and the end marker toward the Target eNB (Step 5Y).

As a result, the Target eNB can forward the downlink data (data #1, #2, #3) received via the Source S-GW and the downlink data (data #4 and #5) received via the Target S-GW toward the UE 20 while guaranteeing the order of the data (see FIG. 6).

### (3.2) Operation Example 2

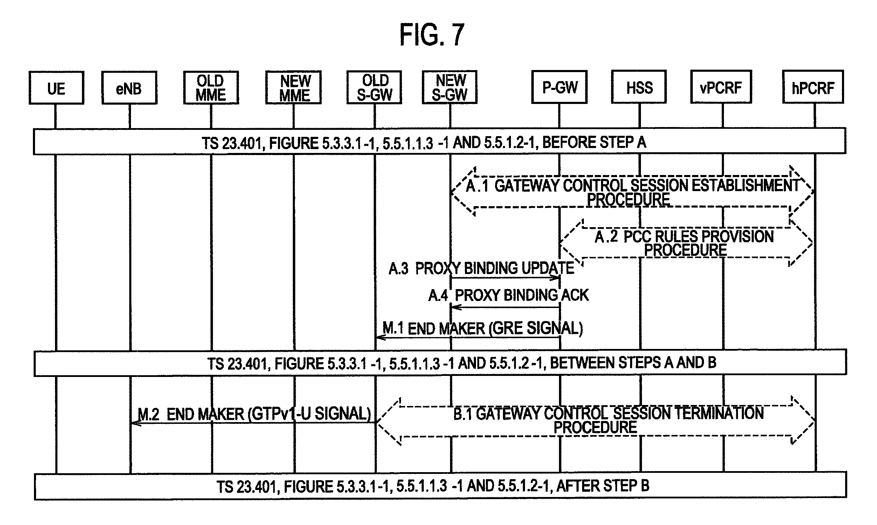

FIG. 7 shows the handover procedure of the UE 20 according to Operation Example 2. Specifically, FIG. 7 is obtained by making changes in the handover procedure shown in Figure 5.7.1-1 (Intra-LTE and Inter-eNodeB Handover with Serving GW Relocation) of the 3GPP TS23.402 (V9.12.0). In Operation Example 2, PMIP is used as the S5/S8 interface.

As shown in FIG. 7, even in Operation Example 2, similarly as Operation Example 1, the P-GW 60 that can recognize the switching of the downlink data forwarding path transmits the end marker. Although the PMIP has been used in Operation Example 2, Operation Example 2 has been extended such that the end marker can be transmitted as a signal that follows the GRE protocol, because, in the conventional 3GPP, an end marker is available only as GTPv1 that operates on a user plane (U-Plane) .

The P-GW 60, after performing the process for the Target S-GW (new S-GW) and the Proxy Binding Update (Step A.3 and Step A.4), transmits the end marker to the Source S-GW (old S-GW) (Step M.1). As explained above, the end marker is transmitted to the Source S-GW as a signal that follows the GRE protocol. Incidentally, the new S-GW shown in FIG. 7 corresponds to the Target S-GW and the old S-GW corresponds to the Source S-GW.

The Source S-GW that received the end marker, along with performing Gateway Control Session Termination Procedure that terminates Control Session with the PCRF 70 (h-PCRF) (Step B.1), transmits the end marker to the eNB 30 (Source eNB) (Step M.2). It is allowable to perform the transmission of the end marker to the eNB 30 (Source eNB) either before or after performing the Gateway Control Session Termination Procedure.

Subsequently, similarly as Operation Example 1, the eNB 30 (Source eNB) forwards the end marker toward the Target eNB. As a result, the Target eNB can forward the downlink data received via the Source S-GW and the downlink data received via the Target S-GW toward the UE 20 while guaranteeing the order of the data.

### (4) Effects and Advantages

According to the mobile communication system 10 of the present embodiment, when switching of the S-GW 50 occurs from the Source S-GW that manages the Source eNB to the Target S-GW that manages the Target eNB because of a transition such as a handover of the UE 20, the P-GW 60 that can recognize the switching of the downlink data forwarding path transmits the end marker to the Source S-GW in accordance with the setting of the downlink data forwarding path to the Target S-GW. The end marker indicates the end of forwarding of the downlink data via the Source eNB. Moreover, the Source S-GW forwards the end marker received from the P-GW 60 via the Source eNB toward the Target eNB.

As a result, when the S-GW 50 switches from the Source S-GW that manages the Source eNB to the Target S-GW that manages the Target eNB because of a transition such as the handover of the UE 20, that is, even when the S-GW Relocation occurs, the end marker can be transmitted from the P-GW 60 that can recognize the switching of the downlink data forwarding path to the Source eNB. In other words, even when the S-GW Relocation occurs, it is possible to guarantee the order of the downlink data while avoiding a reduction in the throughput of the downlink data.

### [Second Embodiment]

A second embodiment of the present invention will be explained below. In the present embodiment, instead of the P-GW 60 transmitting the end marker, an instruction for transmitting the end marker is transmitted from the P-GW 60 to the Source eNB. The following explanation is centered on the differences from the above-explained first embodiment.

### (1) Functional Block Configuration

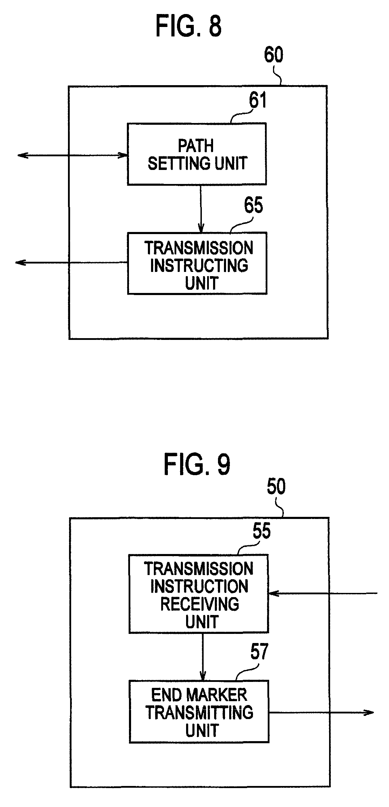

FIG. 8 is a functional block diagram of the P-GW 60 and FIG. 9 is a functional block diagram of the S-GW 50. The configuration of the mobile communication system 10 according to the present embodiment is the same as that in the first embodiment (see FIG. 2). It shall be appreciated that only those functional blocks that are relevant to the present invention have been shown in FIG. 8 and FIG. 9 and other functional blocks have been omitted.

### (1.1) P-GW 60

As shown in FIG. 8, the P-GW 60 includes the path setting unit 61 and a transmission instructing unit 65. The path setting unit 61 is the same as that in the first embodiment.

The transmission instructing unit 65 transmits an end marker transmission instruction instructing transmission of an end marker to the Source S-GW. Specifically, when the S-GW 50 switches from the Source S-GW to the Target S-GW because of a transition such as a handover of the UE 20, the transmission instructing unit 65 transmits the end marker transmission instruction to the Source S-GW in accordance with the downlink data forwarding path set by the path setting unit 61 between the Target S-GW.

The transmission instructing unit 65 can transmit the end marker transmission instruction to the Source S-GW via a control plane set in accordance with the GPRS tunneling protocol (GTP) between the Source S-GW and the P-GW 60. Alternatively, the transmission instructing unit 65 can transmit the end marker transmission instruction to the Source S-GW as a signal set in accordance with the Proxy Mobile IPv6 (PMIPv6) between the Source S-GW and the P-GW 60.

### (1.2) S-GW 50

As shown in FIG. 9, the S-GW 50 includes a transmission instruction receiving unit 55 and an end-marker transmitting unit 57.

When the S-GW 50 is operating as the Source S-GW, the transmission instruction receiving unit 55 receives the end marker transmission instruction from the P-GW 60. After confirming that the received end marker transmission instruction is addressed to itself (Source S-GW), the transmission instruction receiving unit 55 outputs the end marker transmission instruction to the end-marker transmitting unit 57.

The end-marker transmitting unit 57 generates an end marker based on the end marker transmission instruction received from the P-GW 60 and transmits the generated end marker to the Target eNB.

### (2) Operation of Mobile Communication System

The operation of the mobile communication system 10 according to the present embodiment will be explained below. Specifically, similarly as the first embodiment, a handover procedure of the UE 20 when the S-GW 50 switches from the Source S-GW to the Target S-GW is explained.

### (2.1) Operation Example 1

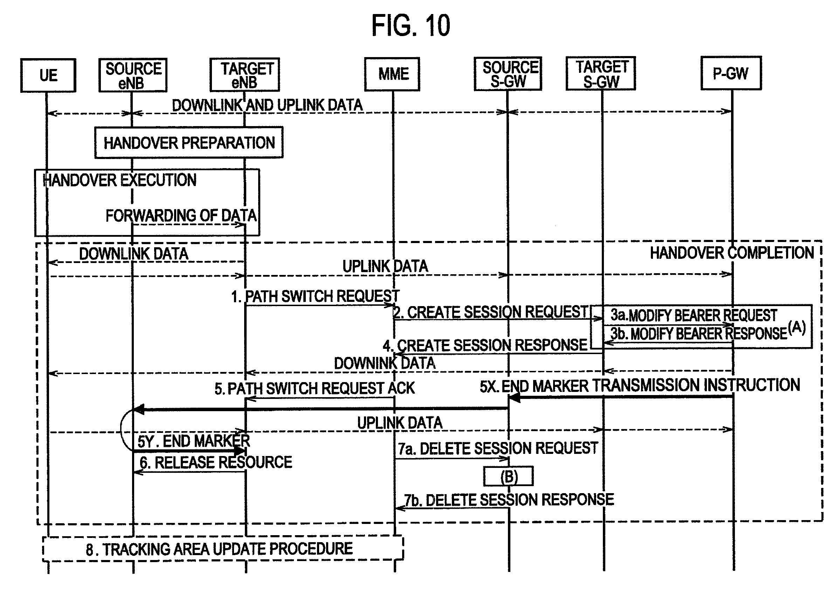

FIG. 10 shows the handover procedure of the UE 20 according to Operation Example 1. Specifically, FIG. 10 is obtained by making changes in the handover procedure shown in Figure 5.5.1.1.3-1 (X2-based handover with Serving GW relocation) of the 3GPP TS23.401. In Operation Example 1, GTP is used as the S5/S8 interface.

In the present embodiment, the P-GW 60 transmits the end marker transmission instruction to the Source S-GW instead of transmitting the end marker itself (Step 5X). The Source S-GW that received the end marker transmission instruction generates an end marker and forwards the downlink data that was forwarded from the P-GW 60 and the end marker toward the Source eNB. The Source eNB that received the downlink data and the end marker forwards the downlink data and the end marker toward the Target eNB (Step 5Y).

The end marker in this case can be an extension of an existing GTPv2 signal or can be a new GTPv2 signal.

### (2.2) Operation Example 2

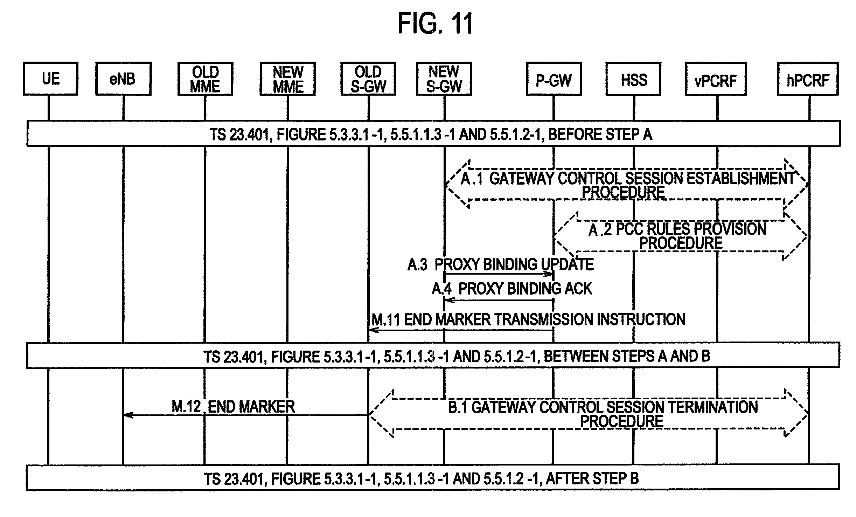

FIG. 11 shows a handover procedure of the UE 20 according to Operation Example 1. Specifically, FIG. 11 is obtained by making changes in the handover procedure shown in Figure 5.7.1-1 (Intra-LTE and Inter-eNodeB Handover with Serving GW Relocation) of the 3GPP TS23.402 (V9.12.0). In Operation Example 2, PMIP is used as the S5/S8 interface.

In the present embodiment, the P-GW 60 transmits the end marker transmission instruction to the Source S-GW instead of transmitting the end marker itself (Step M.11). The end marker transmission instruction in this case can be an extension of an existing PMIPv6 signal, or can be a new PMIPv6 signal.

The Source S-GW that received the end marker transmission instruction, along with performing Gateway Control Session Termination Procedure that terminates Control Session with the PCRF 70 (h-PCRF) (Step B.1), transmits the end marker to the eNB 30 (Source eNB) (Step M.12). Moreover, similarly as the first embodiment, it is allowable to perform the transmission of the end marker transmission instruction to the eNB 30 (Source eNB) either before or after performing the Gateway Control Session Termination Procedure.

### (3) Effects and Advantages

According to the mobile communication system 10 of the present embodiment, even when the S-GW Relocation occurs, the end marker transmission instruction can be transmitted from the P-GW 60 that can recognize the switching of the downlink data forwarding path to the Source eNB, and the Source S-GW can transmit the end marker to the Source eNB. As a result, similarly as the first embodiment, even when the S-GW Relocation occurs, it is possible to guarantee the order of the downlink data while avoiding a reduction in the throughput of the downlink data.

### [Other Embodiments]

The present invention has been explained above in detail by way of the embodiments. However, no part of the above disclosure or drawings shall be understood as limiting the scope of the present invention. Various alternative embodiments will be apparent from the above disclosure to those skilled in the art.

For example, the embodiments of the present invention have been explained by taking the X2 handover as an example; however, the handover is not limited to the X2 handover. The same procedure can be applied to the S1 handover or the Inter-RAT handover.

The above-explained invention can be represented as below. According to one aspect of the present invention, a P-GW 60 (PDN gateway device) capable of forwarding downlink data addressed to a mobile station toward any one of a source serving gateway device and a target serving gateway device includes a path setting unit 61 (path setting unit) that sets, when a transition of the mobile station occurs from a source radio base station to a target radio base station, a downlink data forwarding path, which passes via the target serving gateway device and the target radio base station, to the target serving gateway device; and an end-marker transmitting unit 63 (end-marker transmitting unit) that, when switching of a serving gateway device occurs from the source serving gateway device that manages the source radio base station to the target serving gateway device that manages the target radio base station because of the transition, transmits an end marker, which indicates end of forwarding of the downlink data via the source radio base station, to the source serving gateway device in accordance with the setting of the downlink data forwarding path set by the path setting unit.

In the above aspect of the present invention, the end-marker transmitting unit can transmit the end marker to the source serving gateway device via a user plane set in accordance with the GPRS tunneling protocol between the source serving gateway device and the PDN gateway device.

In the above aspect of the present invention, the end-marker transmitting unit can transmit the end marker to the source serving gateway device via a user plane set in accordance with the Generic Routing Encapsulation protocol between the source serving gateway device and the PDN gateway device.

According to another aspect of the present invention, a P-GW 60 (PDN gateway device) capable of forwarding downlink data addressed to a mobile station toward any one of a source serving gateway device and a target serving gateway device includes a path setting unit 61 (path setting unit) that sets, when a transition of the mobile station occurs from a source radio base station to a target radio base station, a downlink data forwarding path, which passes via the target serving gateway device and the target radio base station, to the target serving gateway device; and a transmission instructing unit 65 (transmission instructing unit) that, when switching of a serving gateway device occurs from the source serving gateway device that manages the source radio base station to the target serving gateway device that manages the target radio base station because of the transition, transmits an end marker transmission instruction instructing transmission of an end marker, which indicates end of forwarding of the downlink data via the source radio base station, to the source serving gateway device in accordance with the setting of the downlink data forwarding path set by the path setting unit.

In the above aspect of the present invention, the end-marker transmitting unit can transmit the end marker to the source serving gateway device via a user plane set in accordance with the GPRS tunneling protocol between the source serving gateway device and the PDN gateway device.

In the above aspect of the present invention, the end-marker transmitting unit can transmit the end marker to the source serving gateway device via a user plane set in accordance with the Generic Routing Encapsulation protocol between the source serving gateway device and the PDN gateway device.

According to still another aspect of the present invention, a mobile communication method capable of forwarding downlink data addressed to a mobile station toward any one of a source serving gateway device and a target serving gateway device includes setting, when a transition of the mobile station occurs from a source radio base station to a target radio base station, a downlink data forwarding path, which passes via the target serving gateway device and the target radio base station, between the target serving gateway device and a PDN gateway device; the PDN gateway device transmitting, when switching of a serving gateway device occurs from the source serving gateway device that manages the source radio base station to the target serving gateway device that manages the target radio base station because of the transition, an end marker, which indicates end of forwarding of the downlink data via the source radio base station, to the source serving gateway device in accordance with the setting of the downlink data forwarding path; and the source serving gateway device forwarding the end marker received from the PDN gateway device to the source radio base station.

According to still another aspect of the present invention, a mobile communication method capable of forwarding downlink data addressed to a mobile station toward any one of a source serving gateway device and a target serving gateway device includes setting, when a transition of the mobile station occurs from a source radio base station to a target radio base station, a downlink data forwarding path, which passes via the target serving gateway device and the target radio base station, between the target serving gateway device and a PDN gateway device; the PDN gateway device transmitting, when switching of a serving gateway device occurs from the source serving gateway device that manages the source radio base station to the target serving gateway device that manages the target radio base station because of the transition, an end marker transmission instruction, which indicates end of forwarding of the downlink data via the source radio base station, to the source serving gateway device in accordance with the setting of the downlink data forwarding path; and the source serving gateway device forwarding an end marker to the source radio base station based on the end marker transmission instruction received from the PDN gateway device.

It is needles to mention that the present invention includes embodiments and the like that are not disclosed above. Therefore, the technical scope of the present invention shall be determined based on the matter (s) specifying the invention that corresponds to the appropriate scope of the claims in view of the above disclosure.

The entire contents of Japanese Patent Application 2013-074001 (filed on March 29, 2013) are incorporated in the description of the present application by reference.

### INDUSTRIAL APPLICABILITY

According to one aspect of the present invention, even when a serving gateway device that manages a transition source radio base station of a mobile station and a serving gateway device that manages a transition destination radio base station of the mobile station are different, it is possible to provide a PDN gateway device and a mobile communication method that guarantee the order of the downlink data while avoiding a reduction in the throughput of the downlink data.

### EXPLANATION OF THE REFERENCE NUMERALS

- 10: Mobile communication system
- 20: UE
- 30: eNB
- 40: MME
- 50: S-GW
- 51: End marker receiving unit
- 53: End-marker forwarding unit
- 55: Transmission instruction receiving unit
- 57: End-marker transmitting unit
- 60: P-GW
- 61: Path setting unit
- 63: End-marker transmitting unit
- 65: Transmission instructing unit
- 70: PCRF

## Claims

1. A PDN gateway device capable of forwarding downlink data addressed to a mobile station toward any one of a source serving gateway device and a target serving gateway device, the PDN gateway device comprising:
a path setting unit that sets, when a transition of the mobile station occurs from a source radio base station to a target radio base station, a downlink data forwarding path, which passes via the target serving gateway device and the target radio base station, to the target serving gateway device; and
an end-marker transmitting unit that, when switching of a serving gateway device occurs from the source serving gateway device that manages the source radio base station to the target serving gateway device that manages the target radio base station because of the transition, transmits an end marker, which indicates end of forwarding of the downlink data via the source radio base station, to the source serving gateway device in accordance with the setting of the downlink data forwarding path set by the path setting unit.

2. The PDN gateway device according to claim 1, wherein the end-marker transmitting unit transmits the end marker to the source serving gateway device via a user plane set in accordance with a GPRS tunneling protocol between the source serving gateway device and the PDN gateway device.

3. The PDN gateway device according to claim 1, wherein the end-marker transmitting unit transmits the end marker to the source serving gateway device via a user plane set in accordance with Generic Routing Encapsulation protocol between the source serving gateway device and the PDN gateway device.

4. A PDN gateway device capable of forwarding downlink data addressed to a mobile station toward any one of a source serving gateway device and a target serving gateway device, the PDN gateway device comprising:
a path setting unit that sets, when a transition of the mobile station occurs from a source radio base station to a target radio base station, a downlink data forwarding path, which passes via the target serving gateway device and the target radio base station, to the target serving gateway device; and
a transmission instructing unit that, when switching of a serving gateway device occurs from the source serving gateway device that manages the source radio base station to the target serving gateway device that manages the target radio base station because of the transition, transmits an end marker transmission instruction instructing transmission of an end marker, which indicates end of forwarding of the downlink data via the source radio base station, to the source serving gateway device in accordance with the setting of the downlink data forwarding path set by the path setting unit.

5. The PDN gateway device according to claim 4, wherein the end-marker transmitting unit transmits the end marker transmission instruction to the source serving gateway device via a control plane set in accordance with a GPRS tunneling protocol between the source serving gateway device and the PDN gateway device.

6. The PDN gateway device according to claim 4, wherein the end-marker transmitting unit transmits the end marker transmission instruction to the source serving gateway device as a signal set in accordance with Proxy Mobile IPv6 between the source serving gateway device and the PDN gateway device.

7. A mobile communication method for forwarding downlink data addressed to a mobile station toward any one of a source serving gateway device and a target serving gateway device, the mobile communication method comprising:
setting, when a transition of the mobile station occurs from a source radio base station to a target radio base station, a downlink data forwarding path, which passes via the target serving gateway device and the target radio base station, between the target serving gateway device and a PDN gateway device;
the PDN gateway device transmitting, when switching of a serving gateway device occurs from the source serving gateway device that manages the source radio base station to the target serving gateway device that manages the target radio base station because of the transition, an end marker, which indicates end of forwarding of the downlink data via the source radio base station, to the source serving gateway device in accordance with the setting of the downlink data forwarding path; and
the source serving gateway device forwarding the end marker received from the PDN gateway device to the source radio base station.

8. A mobile communication method for forwarding downlink data addressed to a mobile station toward any one of a source serving gateway device and a target serving gateway device, the mobile communication method comprising:
setting, when a transition of the mobile station occurs from a source radio base station to a target radio base station, a downlink data forwarding path, which passes via the target serving gateway device and the target radio base station, between the target serving gateway device and a PDN gateway device;
the PDN gateway device transmitting, when switching of a serving gateway device occurs from the source serving gateway device that manages the source radio base station to the target serving gateway device that manages the target radio base station because of the transition, an end marker transmission instruction instructing transmission of an end marker, which indicates end of forwarding of the downlink data via the source radio base station, to the source serving gateway device in accordance with the setting of the downlink data forwarding path; and
the source serving gateway device forwarding an end marker to the source radio base station in accordance with the end marker transmission instruction received from the PDN gateway device.
